# EUROPEAN PATENT SPECIFICATION

(11) **EP 4 031 392 B1**
(45) Date of publication and mention of the grant of the patent: **18.02.2026**
(21) Application number: 20866756.8
(22) Date of filing: 21.09.2020
(51) Int. Cl.: B60K 6/40, B60K 6/405, B60T 13/00, B60W 10/18, B60W 10/20, B62D 11/08, B62D 25/14, B62D 1/16, B60T 7/12

(54) **VEHICLE CONTROL SYSTEMS**
FAHRZEUGSTEUERUNGSSYSTEME
SYSTÈMES DE COMMANDE DE VÉHICULE

(30) Priority: 20.09.2019 US 201962903707 P
(43) Date of publication of application: 27.07.2022
(73) Proprietor: Canoo Technologies Inc., Torrance, California 90503 (US)
(72) Inventor: NARASIMHAN, Ganesh Ram, Torrance, CA 90503 (US); NAJMUDDIN, Khaja, Torrance, CA 90503 (US); PUCCI, Paolo Erasmo, Torrance, CA 90503 (US); CHARBONNEAU, Alexi, Torrance, CA 90503 (US)
(74) Representative: Grünecker Patent- und Rechtsanwälte PartG mbB
(86) International application number: PCT/US2020/051876
(87) International publication number: WO 2021/055979

(56) References cited:
- US-A- 2 168 201
- US-A1- 2003 164 255
- US-A1- 2015 083 509
- US-A1- 2015 101 444
- US-A1- 2015 134 199
- US-B1- 9 802 638

## Description

### FIELD OF THE INVENTION

The present invention relates generally to systems for controlling the movement of a vehicle. More specifically, this invention is directed to the specific combination of functional and structural elements into modular systems for electric vehicles.

### BACKGROUND OF THE INVENTION

Automobile vehicles in general are comprised of many different structural and functional components. In some instances, they may generally be described in relation to a body or cabin, which are designed to enclose the passengers, and the various electrical, mechanical and structural systems, subsystems and components that allow the vehicle to operate. In traditional automobile design, the body and various functional systems and components are inextricably intertwined. For example, mechanical linkages directly interconnect the steering and brake systems between the wheels and the passenger, and elements such as the motor, transmission system, and cooling systems are disposed in a front enclosure that extends upward into the body of the vehicle. Additional structural components may serve to house certain functional elements essential for vehicle operation.

Recent advances in electric motor and battery technologies have made electric vehicles practical to manufacture. Electric vehicles have a number of advantages over conventional internal combustion vehicles, including the dramatically reduced footprint of the drive train components. Further advancements in signal processing and drive-by-wire technologies means that it is now possible to produce vehicle platforms containing all the necessary functional components of a vehicle. However, despite the potential these advancements represent, most electric vehicles being produced today continue to incorporate designs that have been traditionally used in internal combustion engines. This can be particularly true for the framework and layout of many of the features including the drive motors.

Document US2003/164255A1 discloses a chassis having systems responsive to a nonmechanical control signals and a simplified body-attachment interface including preassembled modules to enhance ease and simplicity of chassis assembly. The chassis is preferably configured to minimize the possibility of a preassembled module being incorrectly positioned within the chassis.

### SUMMARY OF THE INVENTION

Many embodiments are directed to an electric vehicle and the systems and methods that are used to control the movement of the vehicle. Numerous embodiments of a vehicle control system include a steering system wherein the steering system has a steering device electromechanically connected to a steering feedback actuator where the actuator is configured to receive input signals from the steering device and translate input signals into a series of output signals. The steering actuator can then transmit said output signals to one or more motor-wheel assemblies of the vehicle such that the direction of the wheel assemblies can be manipulated to direct the position of a vehicle and wherein the steering system has an operative electrical connection to connect to a vehicle. Additionally the vehicle control system has a braking system comprising a braking input device electromechanically connected to a braking actuator that receives an input signal from the input device that corresponds to the movement of the input device and wherein the braking actuator electromechanically activates one or more braking components that are connected to a wheel braking mechanism such that when the braking actuator is engaged the wheel braking mechanism engages a wheel rotor causing the vehicle to stop. Additionally, the steering system and the braking system are collocated within a single modular form factor that is mountable within a vehicle cabin.

In other embodiments, the vehicle control system has a vehicle acceleration input system disposed within the form factor wherein the acceleration input system has an acceleration input device electromechanically connected to an acceleration feedback generator such that the acceleration feedback generator generates a signal sent to a drive system of a vehicle to thereby increase the speed of the vehicle.

In still other embodiments, the form factor is movably disposed on a first support structure and wherein the form factor can be positioned at one or more positions on the support structure.

In yet other embodiments, the form factor is disposed in a location selected from a group consisting of left side, right side, and middle.

In still yet other embodiments, the vehicle control system has at least a second support structure wherein a front portion of the form factor is connected to the first support structure and a rear portion of the form factor is connected to the second support structure.

In other embodiments, the second support structure is disposed at a location that is lower than the first support structure such that the form factor is disposed at an angle between the first and second support structures.

In still other embodiments, the form factor is moveably disposed between the first and second support structures such that the disposed angle can be adjusted.

In yet other embodiments, the vehicle control system has at least two mounting brackets wherein at least one of the at least two mounting brackets corresponds to and supports the braking system and at least another one of the at least two mounting brackets corresponds to and supports the steering system, and wherein each of the at least two mounting bracket connect the form factor to the first support structure.

In still yet other embodiments, the vehicle control system has at least a third and a fourth mounting bracket wherein the third mounting bracket corresponds to and supports the braking system, and wherein the fourth mounting bracket corresponds to and supports the steering system, and wherein the third and fourth mounting brackets are connected to the second support structure.

In other embodiments, the form factor comprises a housing that encloses at least a portion of the steering system and at least a portion of the braking system.

In still other embodiments, the steering system and the braking system are collocated on a single mounting bracket and wherein the single mounting bracket has a steering portion and a braking portion, the steering portion comprising at least two mounting points where the steering system can be movably connected to the single mounting bracket such that the steering system can be moved within the form factor, and wherein the braking portion has at least one mounting point configured to connect with a portion of the braking system to secure the braking system to the single mounting bracket such that the braking system remains immoveable.

In yet other embodiments, the steering system is extendable such that a portion of the steering system can extend beyond the form factor and adjust to a particular occupant.

In still yet other embodiments, the steering input device is a steering wheel.

In other embodiments, the braking input device is a brake pedal.

In still other embodiments, the braking input device is disposed outside of the form factor and electronically connected to the braking components of the braking system.

In yet other embodiments, the brake pedal is a floating brake pedal.

In still yet other embodiments, the form factor comprises a housing that encloses at least a portion of the steering system and at least a portion of the braking system, and at least a portion of the acceleration system.

In other embodiments, each of the steering system and braking system only have at least one operative electronic connection between the respective system and a vehicle platform such that the operative connection is not mechanical in nature.

In still other embodiments, the form factor is removable from the cabin of the vehicle.

Other embodiments may include an electric vehicle that has a self-contained electric vehicle platform and a self-contained vehicle cabin connected to the self-contained electric vehicle platform, wherein the self-contained vehicle cabin further comprises a vehicle control system. The vehicle control system has a steering system wherein the steering system comprises a steering device electromechanically connected to a steering feedback actuator where the actuator is configured to receive input signals from the steering device and translate input signals into a series of output signals and transmit said output signals to one or more motor-wheel assemblies of the vehicle such that the direction of the wheel assemblies can be manipulated to direct the position of the vehicle and wherein the steering system has an operative electrical connection to connect to a vehicle. Additionally, the control system may have a braking system with a braking input device electromechanically connected to a braking actuator that receives an input signal from the input device that corresponds to the movement of the input device and wherein the braking actuator electromechanically activates one or more braking components that are connected to a wheel braking mechanism such that when the braking actuator is engaged the wheel braking mechanism engages a wheel rotor causing the vehicle to stop. Finally the steering system and the braking system is collocated within a single modular form factor that is mountable within a vehicle cabin and the vehicle control system is connected to the self-contained electric vehicle platform through a disconnectable electronic connection point.

In yet other embodiments, the form factor is removable from the vehicle cabin and such that the vehicle platform can be autonomously controlled.

Additional embodiments and features are set forth in part in the description that follows, and in part will become apparent to those skilled in the art upon examination of the specification or may be learned by the practice of the invention. A further understanding of the nature and advantages of the present invention may be realized by reference to the remaining portions of the specification and the drawings.

### DESCRIPTION OF THE DRAWINGS

The description will be more fully understood with reference to the following figures, which are presented as exemplary embodiments of the invention and should not be construed as a complete recitation of the scope of the invention, wherein:
Fig. 1 illustrates a traditional steering system according to known art.
Fig. 2 illustrates a schematic of a traditional braking system according to known art.
Fig. 3 illustrates an interior view of a vehicle in accordance with embodiments of the invention.
Fig. 4 illustrates a vehicle control system in relation to a vehicle platform in accordance with embodiments of the invention.
Fig. 5 illustrates a vehicle control system in accordance with embodiments of the invention.
Fig. 6 illustrates a vehicle control system enclosure in accordance with embodiments of the invention.
Figs. 7A through 7C illustrate a vehicle control system in accordance with embodiments of the invention.

### DETAILED DESCRIPTION OF THE INVENTION

Turning now to the drawings, many embodiments include a vehicle control system with additional systems and associated components designed to control the movement of the vehicle. For example, many embodiments include a steering system that has a steering wheel connected to a steering column much in the traditional sense. However, in conjunction with the mechanical steering components, many embodiments include control actuators that translate motion of the mechanical components into electrical and mechanical control and movement of the wheels. In accordance with many embodiments, the form factor of the vehicle control systems is compact such that it can be supported by structures within the vehicle cabin and remains relatively hidden from view of the occupants. In addition to the steering mechanism, many embodiments may incorporate the vehicle braking systems within the same form factor of the steering mechanism such that the various systems have positions that are relatively fixed with respect to each other.

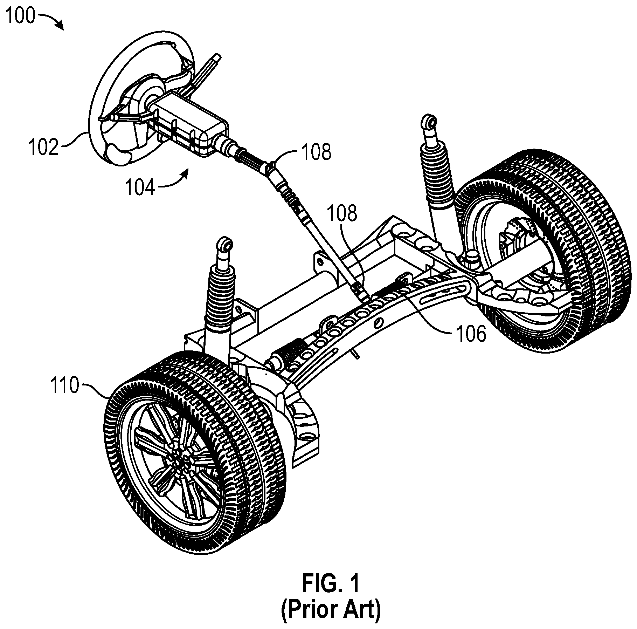

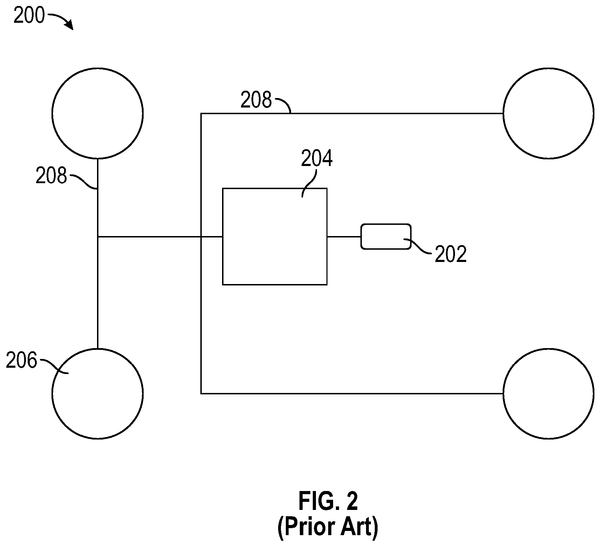

The control of a vehicle can be categorized into several basic functions such as accelerating, steering, and braking. Each of the functions may require one or more components and/or systems that work in alone or in tandem to control the vehicle such that it can move in a desired direction and velocity. Traditionally, vehicles, including electric vehicles, utilize the various systems and subsystems housed behind a traditional dash within the cabin of the vehicle. The dash generally runs laterally from one side of a vehicle to the other and can house a number of different displays for the general use and entertainment of the vehicle occupants. Accordingly, the dash represents a large section of the front of the vehicle used to hide the numerous control mechanisms of the vehicle. This can allow automotive manufactures a large space from which to work in terms of positioning the various components of the respective control systems. For example, Fig. 1 illustrates a steering system 100 in accordance with known art of a traditional vehicle. The steering system 100 traditionally consists of a steering wheel 102 connected to a steering column 104 that is mechanically connected to a steering gear system 106. Many such systems utilize a number of universal joints 108 connected to a rack and pinion type gears to transfer the movement of the steering wheel 102 to the wheels 110 and thus control the directional movement of a vehicle. In addition to steering systems, many traditional vehicles use a separate braking system as illustrated in the schematic in Fig. 2. Fig. 2 illustrates a basic traditional braking system 200 with a braking input 202 that is connected to a hydraulic reservoir or control device 204. The hydraulic control device 204 traditionally has a reservoir with hydraulic fluid that can be transmitted to the individual wheel brakes 206 through a series of hydraulic lines 208. When an input is received from the input device 202 the control device 204 can regulate the amount of fluid transmitted to the brakes 206 such that the speed of the vehicle can be controlled. Additionally, many systems may include a number of different sensors and other electronic components to help control the amount of braking that can be done in a more precise manner, which in turn assists the driver of a vehicle.

As previously discussed, there are a number of different systems that can be used to control the movement of the vehicle. Additionally, many of those systems are packaged throughout the cabin of the vehicle and are interconnected mechanically with the chassis and underbody components. Moreover, traditional vehicles and traditional vehicle designs tend to design around a large front portion of the vehicle that typically accounts for an engine compartment in internal combustion engine vehicle. Some of the many electric vehicles also tend to follow with the more traditional designs having a larger front portion of the vehicle, even without a need for an engine compartment. Accordingly, such designs tend to position occupants rearward from the front of the vehicle which can allow for the placement of the control components in the cabin and more forward of the occupants. The rearward placement of the occupants and incorporation of a forward engine type compartment, generally can be limiting on the overall adaptability of more advanced vehicle designs. For example, as mentioned, many electric vehicles, that do not require the engine compartment still follow those designs which can be very limiting in the way of occupant placement. Moreover, such traditional configurations continue to rely heavily mechanical connections between the various vehicle control systems which offer a number of different fail points. Additionally, they can be bulky as well as difficult and costly to repair. Moreover, traditional systems and configurations offer very little in the way of adjustability and adaptability.

In contrast, many embodiments described herein, take advantage of the unique freedom that an electric vehicle can offer. For example, many embodiments are adaptable to an electric vehicle platform that can be self-contained. In other words, the electric vehicle platform can house the battery, wheels, drive motors, suspension systems, etc. such that it can be relatively autonomous if needed. Therefore, some embodiments can allow for different seating configurations that can place occupants more forward than a traditional vehicle design. Accordingly, the more forward placement of the occupants can pose various benefits and problems that may need to be addressed with respect to other systems such as vehicle control systems. However, many embodiments can take advantage of the improved spacing which can allow for improved adaptability as well as the use of numerous modular components. For example, many embodiments of vehicle control systems can be adaptable to electric vehicles with a vehicle platform that is wholly separate from a vehicle cabin, thus eliminating the need for bulky mechanical connections between systems. Likewise, the removal of bulky mechanical linkages can reduce maintenance costs as well as improve the overall functionality of the interior of a vehicle.

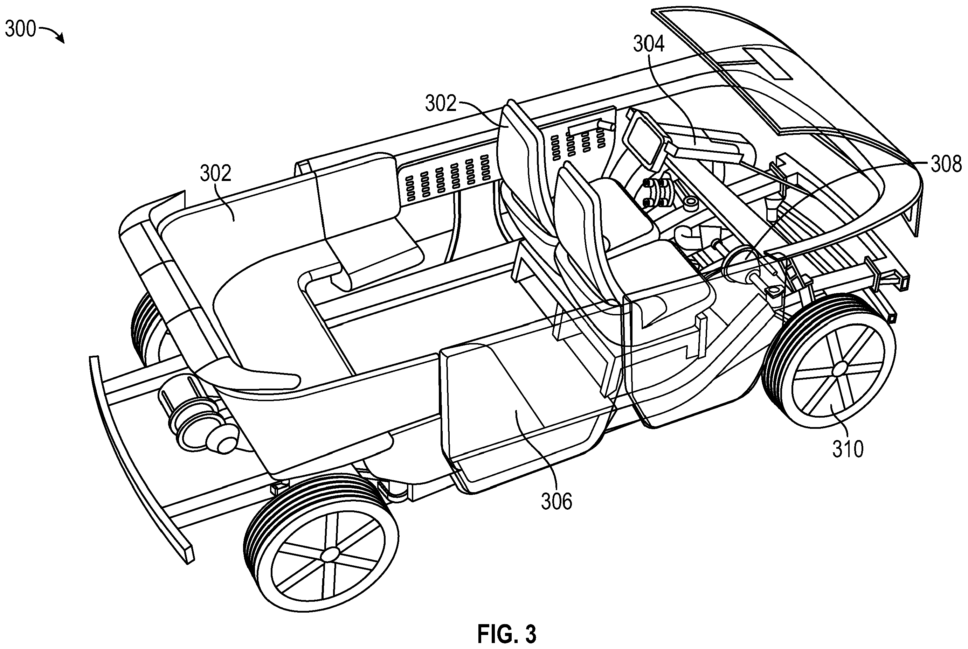

In many embodiments, the vehicle cabin configuration can be adaptable to any number of different configurations by taking advantage of some of the unique characteristics of electric vehicles. For example, Fig. 3 illustrates an interior view of a vehicle cabin in accordance with various embodiments. The vehicle cabin 300 can have be configured such that the body, containing the seating elements 302 as well as the vehicle control mechanisms 304, is self-contained and is separate and distinct from the vehicle platform 306. The vehicle platform 306 can contain the respective drive motors 308 as well as the wheels 310 and associated suspension systems (not shown) and can act as a self-contained moveable body. In accordance with many embodiments, the vehicle control mechanism(s) 304 can be electronically connected to the vehicle platform 306 such that no mechanical connection between the platform and the body is present. This can be advantageous in that the failure of a control system can be repaired and/or replaced without the need to dig into the complexity of the subsystems like the braking lines or steering connections.

The use of electronic connections, rather than the traditional mechanical ones can pose certain technical challenges such as safety as well as adequate redundant systems. Notwithstanding the technical challenges, the use of such systems can have a great impact on the overall vehicle weight as well as manufacturing costs. Additionally, such systems can allow for improved packaging within the vehicle. For example, absent the mechanical connections, the control systems can be packaged in nearly any place suitable within the vehicle. Fig. 3 for example, illustrates a packaged vehicle control system 304 that is positioned traditionally on the driver's side of the vehicle. Although the control system 304 is positioned on the left side or driver's side, it can be appreciated that such systems can be positioned in nearly any space within the cabin. For example, in countries in which the driver sits on the right side of the vehicle the control system 304 could be moved from the left to the right without any modifications to the platform 306 on which the cabin rests. The electronic connections could remain the same with a simple movement of the control systems 304. In order to facilitate such movements some systems can be connected to a cross bar the extends laterally across the width of the cabin 300. This cross bar can serve as a structural support for the cabin as well as a support for the control systems 304. Accordingly, many embodiments of packaged controls systems may be equipped with a variety of different mounting mechanisms that can allow for movement on the cross bar.

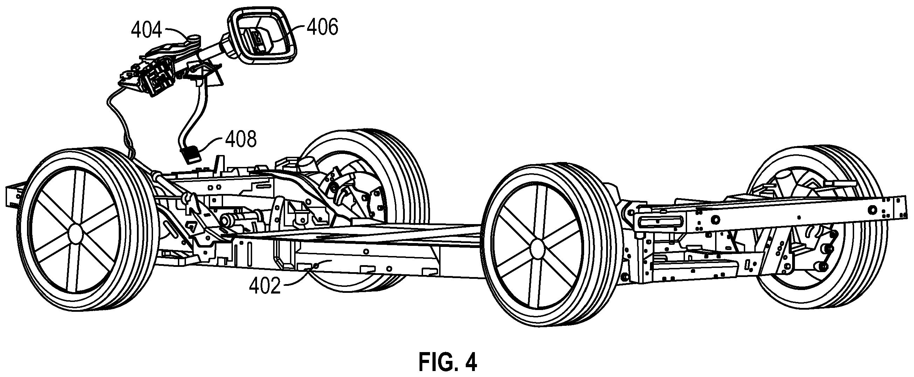

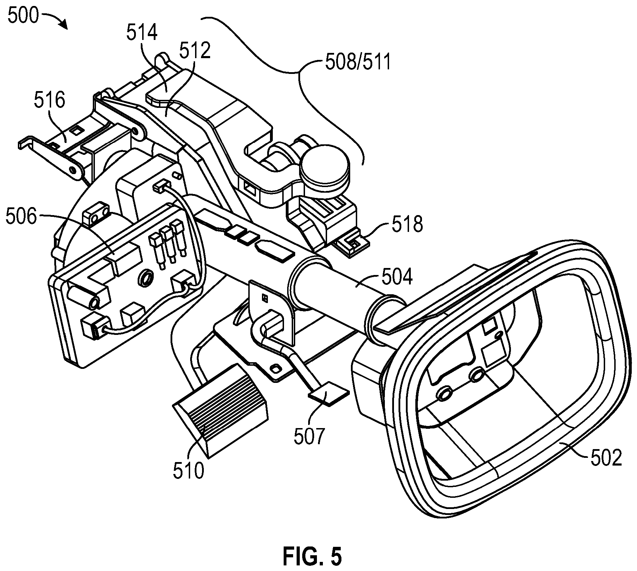

Moving on to Fig. 4 it can be better appreciated the potential spatial configuration that can be afforded with packaged system that may by solely or partially electronically connected to a vehicle platform. For example, Fig. 4 illustrates a vehicle platform 402 without the associated cabin with an associated vehicle control system 404. The vehicle control system 404, in accordance with some embodiments, can be a packaged system with a steering system that is collocated with a braking system, as will be further illustrated in Figs. 5 through 7C. In numerous embodiments, the vehicle control system 404 can have a steering input such as a steering wheel 406. Likewise, the control system 404 can have one or more speed control mechanisms 408 such as a brake pedal and/or accelerator. The speed control mechanism can provide a speed input into the control system that can subsequently transfer the input into the respective subsystems such as the brakes and/or drive motors. For example, acceleration systems can have an input device that generates a signal to be transmitted to the various components of a drive system such as the motor(s) that can subsequently alter the respective speed of a vehicle. Likewise, the braking system can have similar inputs and outputs, although many braking systems may also have hydraulic outputs.

As has been discussed, some embodiments may package the vehicle control system into a single form factor that can collocate subsystems such as steering, braking, and/or acceleration. Fig. 5 illustrates an embodiment of a vehicle control system 500 that is packaged within a particular form factor and can be adapted to or mounted in any number of different vehicle configurations. In some embodiments, the vehicle control system could be completely removed in the case of an autonomous vehicle. In some embodiments the vehicle control system 500 has a steering wheel 502 that may be similar to a traditional steering wheel. In numerous embodiments the steering wheel 502 can be connected to a steering column 504 that is connected to a steering feedback actuator 506. The steering feedback actuator can act to receive input from the steering wheel 502 and translate a rotational movement into a signal that can be transmitted to other components within the steering system such as the wheels, where the signals are subsequently converted to directional movement within the wheels. Some embodiments may be equipped with a number of different systems that can help improve safety such as airbags or driver control assistance systems that can be integrated within the form factor of the overall vehicle control system. Additionally, some embodiments of the vehicle control system 500 can have some traditional elements such as adjustment mechanisms 507 for the steering column or other components. Such adjustment mechanisms can be mechanical or electromechanical in nature and can provide for a number of different adjustments to suit any type of occupant.

In numerous embodiments, the control system 500 may be equipped with a braking system 508. The braking system 508 can be a combination of electrical braking control with some more traditional braking components. For example, many embodiments may have a traditional brake pedal 510 that provides an input of brake pressure from the occupant and is electronically connected to a brake control unit. The brake control unit 511 can measure the amount of pressure from the occupant and subsequently activate the hydraulic braking system which generates hydraulic pressure to each of the wheels of the vehicle. For example, the brake control can unit 511 can receive an electrical signal from the brake pedal actuation unit to determine the pressure to be generated to the wheels of vehicle. In various embodiments, the determined pressure can be transmitted to each of the wheels by hydraulic pressure that corresponds to the respective pressure from the brake pedal or other brake input device. In numerous embodiments, the brake control unit 511 can measure the travel of the brake pedal 510 with a sensor, which can be used to generate a signal to the hydraulic portions of the control system 500 and subsequently activate the braking system on the individual wheels of the vehicle. In some embodiments, the brake control unit 511 may use both a pressure and movement sensor to provide for a redundant system to ensure the braking system continues to work. In many embodiments, the braking system 508 can have a traditional hydraulic pump or master cylinder 512 as well as a reservoir 514 for the hydraulic fluid. As can be appreciated, the collocation of a braking system and a steering system within a single form factor can pose certain packaging constraints that may require unique solutions with respect to the various components such as the braking system 508. For example, numerous embodiments of a braking system may be uniquely configured to reduce the content on the brake pedal actuation including the reservoir and master cylinder. Some embodiments of a braking system may use a uniquely configured reservoir 514 such as an elongated flatter reservoir as compared to a more traditional bulky design. Additionally, the reservoir may take on any number of different shapes to fit within the desired form factor such as an "S" shaped, "U" shaped, or any other shape that may be required. Such embodiments can allow for a more compact and modular configuration of the braking system such that it can fit within a modular form factor that can be installed in a number of different positions, as well as removed completely.

In accordance with numerous embodiments, the braking system may be equipped with a number of different sensors and/or additional control systems to provide redundancy in the system as well as improve the overall function of the brake system. For example, many systems 508 may have vehicle stability control systems, antilock brake systems, regenerative braking systems that can be coupled with the other components, sensors, and controllers to effectively control the speed of the vehicle. As can be appreciated, the vehicle control system can be contained within a single form factor that is easily mountable in a number of different positions within a vehicle. As such, many embodiments may include a number of different mounting brackets 516 that can serve as support structures for the steering, braking, and/or acceleration components as well as provide mounting points 518 to mount the control system 500 to the interior of the vehicle. Although, a specific configuration of a braking system can be illustrated, it should be understood that many embodiments can use alternate configurations of braking components to activate and control the braking system. For example, some embodiments may use a connected braking pedal that is free floating from the system. Other embodiments may use a separate pedal or input device that is solely reliant on an electrical input and is electronically connected to the other components of the braking system.

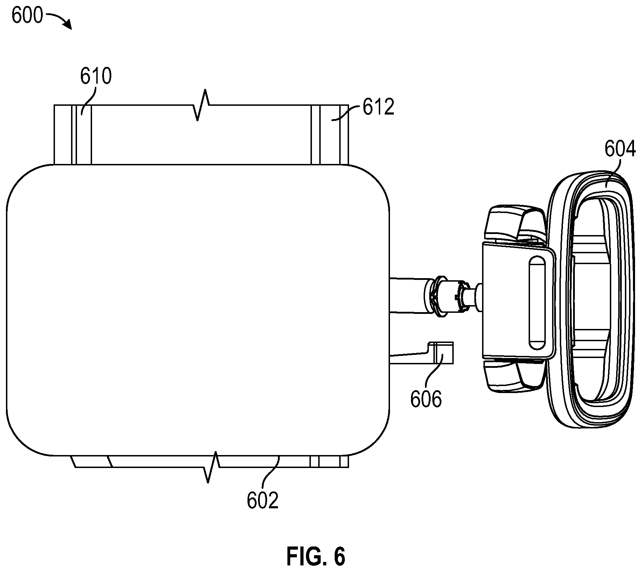

As can be fully appreciated, placing numerous components of the vehicle control system within a single form factor can allow for a housing or enclosure to be placed around the various components. As illustrated in Fig. 6, some embodiments of a vehicle control system 600 can have a housing 602 that encloses the various components or at least the majority of the components of the vehicle control system 600. Although most of components such as the braking control elements and steering actuator can be housed in an enclosure 602, some elements that require occupant interaction may reside outside of the housing. For example, steering controls such as steering wheels 604 and steering column adjustment device 606 can be positioned outside the housing 602 such that an occupant can actively engage with such devices. Additionally, having a housing 602 can have various advantages such as improving the fit, form, and function within the cabin space of the vehicle. It can also provide a more aesthetically pleasing configuration. Although a specific configuration of a housing or enclosure 602 is illustrated, it should be understood that any number of housings can be used. For example, some embodiments may have a housing that has dimensions of approximately 500x100x250 mm. Since many embodiments of a vehicle control system can be configured to fit within a single form factor, it can be further appreciated that many embodiments may be configured to mount to one or more mounting structures 610/612 within a vehicle cabin.

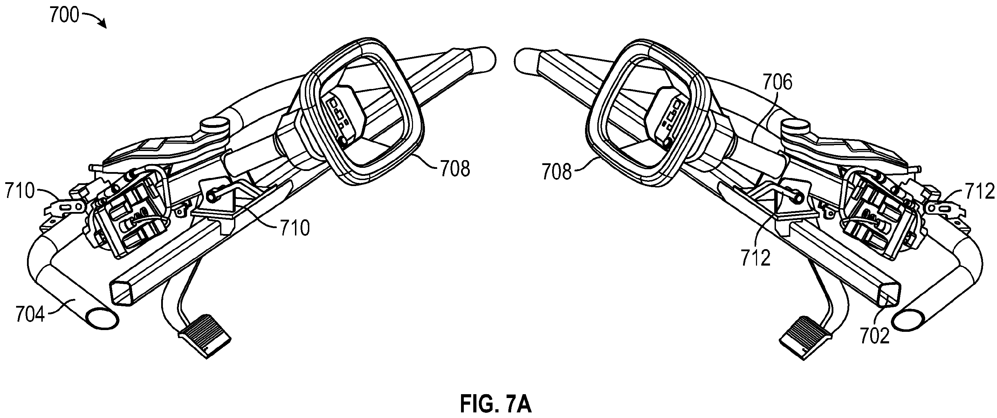

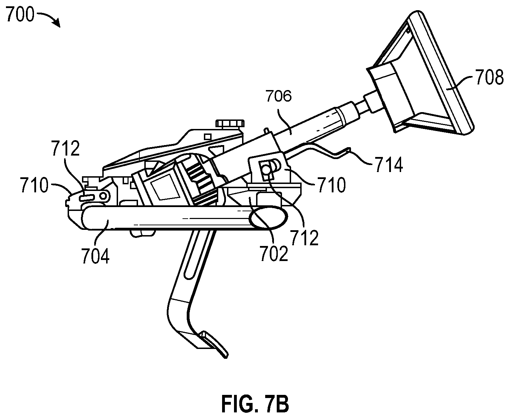

Figs. 7A through 7C illustrate a number of different mounting positions and configurations of a vehicle control system in accordance with embodiments of the invention. For example, Fig. 7A illustrates a vehicle control system 700 in accordance with many embodiments that is configured to be mounted in different positions along support structures 702 and 704. Although, two different support structures 702 and 704 are illustrated, some embodiments of a vehicle control system 700 may be adaptable to mount to a single support structure. Fig. 7B illustrate a side view of a vehicle control system 700 where the system 700 is mounted to both an upper 702 and a lower 704 support structure. Accordingly, the different heights of support structures can allow for the steering column 706 and steering wheel 708 to be angled at a position that is comfortable for the occupant. Additionally, control systems 700 according to various embodiments, may have multiple mounting brackets 710 that are moveably connected to the control system 700 such that the angle of the system can be adjusted. The mounting brackets 710 can have one or more pivot points 712 that can allow for multiple adjustment angles such that the system 700 can accommodate a number of different occupants. In accordance with many embodiments, the collocation of the various subsystems within a single form factor can allow for a number of different design configurations to allow for the adaptability and modularity of the vehicle control systems. For example, as has been described the steering system may require the ability to move or be adjusted, however the same adjustment or configuration may not be required or even desired for the braking system to move. Accordingly, many embodiments of a mounting bracket 710 can be singular in nature yet have more than one section. For example, some embodiments of a mounting bracket 710 may have a steering side and a braking side where the steering side is configured with the pivot points 712 while the braking side doesn't have similar pivot points. As can be appreciated, the adjustment of the vehicle control system can be done with an adjustment device 714. In some embodiments, the adjustment device 714 can adjust the telescopic extension of the steering column 706 and/or the angle of the vehicle control system 700.

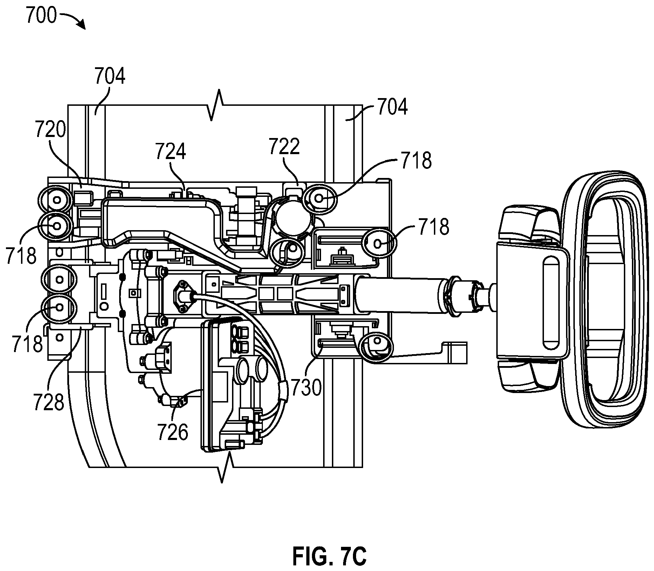

As many embodiments may be configured to mount to multiple support structures 702/704 and that the system 700 can be fit within a single form factor, it can be appreciated that numerous embodiments may have a number of different mounting points 718 as illustrated in Fig. 7C. For example, many embodiments of a packaged control system 700 can have one or braking/ accelerating mounting brackets 720/722 that support the braking components 724 within the control system. Likewise, the steering components 726 may have multiple mounting brackets 728/730. Such mounting brackets can be configured with multiple mounting points 718 that correspond to at least one mounting structure 702/704. Additionally, it can be appreciated that the position of the mounting brackets 728/730 can vary with respect to the different components and the overall control system 700. For example, some brackets may be positioned approximately 100mm away from the centerline of the control system. As previously described, some embodiments of a vehicle control system 700 can be configured to mount to a single mounting structure rather than two separate structures which can have a number of different advantages including, but not limited to, increased cabin space for occupants. Additionally, many embodiments of the control system 700 and the lack of mechanical connections can allow for increased modularity of the control system such that a single vehicle design can be used in multiple markets without significant modification. The improved modularity can reduce the need for additional tooling and subsequently reduce manufacturing costs and improve manufacturing efficiency.

The compactability of the systems described above can be very advantageous in accordance with many embodiments to allow for a variety of configurations. For example, such compactability can allow the system to be placed on the left or right side of the vehicle with little to no modifications to the mounting components. Additionally, such systems can be placed at locations completely apart from the driver's seat or compartment and placed in any number of convenient locations. Many embodiments can also allow for a complete remove of the vehicle control system that incorporates occupant interface elements. Accordingly, some embodiments can have a vehicle control system that is absent of any occupant interface such that the vehicle can still be controlled by autonomous control features and elements that lack any human input.

Although not fully illustrated in the figures, many embodiments of a vehicle control system may have various wires and/or hydraulic connections, such as hoses, that can act as connectors to physically connect the control system to a vehicle platform. It should be understood that the "form factor" of the various embodiments can encompass the numerous wires and/or other connections that can be used to create the connection between the control system and a vehicle. Additionally, many embodiments may utilize easily removable or disconnectable connection points such that the control system itself can be removed for repairs or replacement.

The various embodiments described herein illustrate vehicle control systems that can improve the overall function of a vehicle by allowing for more efficient use of space within a vehicle cabin. Additionally, many embodiments allow for improved modularity that can improve the adaptability of a vehicle in a number of different markets. While the current invention may divide many of the functional and structural elements of vehicle control systems, it will be understood that any vehicle control system, according to embodiments may combine, include or omit any of the described elements as desired by a specific vehicle control system design.

### SUMMARY

As can be inferred from the above discussion, the above-mentioned concepts can be implemented in a variety of arrangements in accordance with embodiments of the invention. Specifically, many embodiments include an electric vehicle positioned to take advantage of the potential extra space in such vehicles that do not require bulky internal combustion engines. Accordingly, many embodiments incorporate a packaged form factor of a vehicle control system that may include both the steering and braking systems and components. Achieving such functionality, according to embodiments, involves the implementation of special arrangements/designs between subsystems described above.

Accordingly, although the present invention has been described in certain specific aspects, many additional modifications and variations can be made within the scope of the invention, as defined by the appended claims. Thus, embodiments of the present invention should be considered in all respects as illustrative and not restrictive.

## Claims

1. A vehicle control system (404, 500, 600, 700) comprising:
a steering system wherein the steering system comprises a steering device electromechanically connected to a steering feedback actuator (506) where the actuator is configured to receive input signals from the steering device and translate input signals into a series of output signals and transmit said output signals to one or more motor-wheel assemblies of the vehicle such that the direction of the wheel assemblies can be manipulated to direct the position of the vehicle and wherein the steering system has an operative electrical connection to connect to a vehicle;
a braking system (508) comprising a braking input device electromechanically connected to a braking actuator that receives an input signal from the input device that corresponds to the movement of the input device and wherein the braking actuator electromechanically activates one or more braking components that are connected to a wheel braking mechanism such that when the braking actuator is engaged the wheel braking mechanism engages a wheel rotor causing the vehicle to stop; **characterized in that**
the steering system and the braking system are collocated within a single modular form factor that is mountable within a vehicle cabin.

2. The vehicle control system of claim 1 further comprising a vehicle acceleration input system disposed within the form factor wherein the acceleration input system has an acceleration input device electromechanically connected to an acceleration feedback generator such that the acceleration feedback generator generates a signal sent to a drive system of a vehicle to thereby increase the speed of the vehicle.

3. The vehicle control system of claim 1, wherein the form factor is movably disposed on a first support structure and wherein the form factor can be positioned at one or more positions on the support structure.

4. The vehicle control system of claim 3, wherein the form factor is disposed in a location selected from a group consisting of left side, right side, and middle.

5. The vehicle control system of claim 3, wherein the form factor is removable.

6. The vehicle control system of claim 3, further comprising at least a second support structure wherein a front portion of the form factor is connected to the first support structure and a rear portion of the form factor is connected to the second support structure.

7. The vehicle control system of claim 6, wherein the second support structure is disposed at a location that is lower than the first support structure such that the form factor is disposed at an angle between the first and second support structures.

8. The vehicle control system of claim 7, wherein the form factor is moveably disposed between the first and second support structures such that the disposed angle can be adjusted.

9. The vehicle control system of claim 6, further comprising at least two mounting brackets (516) wherein at least one of the at least two mounting brackets (516) corresponds to and supports the braking system and at least another one of the at least two mounting brackets (516) corresponds to and supports the steering system, and wherein each of the at least two mounting bracket connect the form factor to the first support structure.

10. The vehicle control system of claim 9, further comprising at least a third and a fourth mounting bracket (516) wherein the third mounting bracket corresponds to and supports the braking system, and wherein the fourth mounting bracket corresponds to and supports the steering system, and wherein the third and fourth mounting brackets are connected to the second support structure.

11. The vehicle control system of claim 1, wherein the form factor comprises a housing that encloses at least a portion of the steering system and at least a portion of the braking system; or
wherein the steering system and the braking system are collocated on a single mounting bracket and wherein the single mounting bracket has a steering portion and a braking portion,
the steering portion comprising at least two mounting points where the steering system can be movably connected to the single mounting bracket such that the steering system can be moved within the form factor, and
wherein the braking portion has at least one mounting point configured to connect with a portion of the braking system to secure the braking system to the single mounting bracket such that the braking system remains immoveable; or
wherein the steering system is extendable such that a portion of the steering system can extend beyond the form factor and adjust to a particular occupant; or
wherein the steering input device is a steering wheel; or
wherein the braking input device is disposed outside of the form factor and electronically connected to the braking components of the braking system; or
wherein each of the steering system and braking system only have at least one operative electronic connection between the respective system and a vehicle platform such that the operative connection is not mechanical in nature; or
wherein the form factor is removable from the cabin of the vehicle.

12. The vehicle control system of claim 1, wherein the braking input device is a brake pedal (510), wherein, optionally, the brake pedal is a floating brake pedal.

13. The vehicle control system of claim 2, wherein the form factor comprises a housing that encloses at least a portion of the steering system and at least a portion of the braking system, and at least a portion of the acceleration system.

14. An electric vehicle comprising:
a self-contained electric vehicle platform;
a self-contained vehicle cabin connected to the self-contained electric vehicle platform, wherein the self-contained vehicle cabin further comprises a vehicle control system according to claim 1 and
wherein the vehicle control system is connected to the self-contained electric vehicle platform through a disconnectable electronic connection point.

15. The vehicle control system of claim 14, wherein the form factor is removable from the vehicle cabin and such that the vehicle platform can be autonomously controlled.

## Patentansprüche

1. Fahrzeug-Steuerungssystem (404, 500, 600, 700), das umfasst:
ein Lenksystem, wobei das Lenksystem eine Lenkvorrichtung umfasst, die elektromechanisch mit einem Lenkrückkopplungs-Betätigungselement (506) verbunden ist, wobei das Betätigungselement so ausgeführt ist, dass es Eingangssignale von der Lenkvorrichtung empfängt und Eingangssignale in eine Reihe von Ausgangssignalen umwandelt und die Ausgangssignale an eine oder mehrere Motor-Rad-Baugruppe/n des Fahrzeugs ausgibt, so dass die Richtung der Rad-Baugruppen beeinflusst werden kann, um die Position des Fahrzeugs zu kontrollieren, und wobei das Lenksystem eine funktionale elektrische Verbindung zum Verbinden mit einem Fahrzeug aufweist;
ein Bremssystem (508), das eine Brems-Eingabevorrichtung umfasst, die elektromechanisch mit einem Brems-Betätigungselement verbunden ist, dass ein Eingangssignal von der Eingabevorrichtung empfängt, dass der Bewegung der Eingabevorrichtung entspricht, und wobei das Brems-Betätigungselement elektromechanisch eine oder mehrere Brems-Komponente/n aktiviert, die mit einem Rad-Bremsmechanismus verbunden ist/sind, so dass, wenn das Brems-Betätigungselement eingerückt ist, der Rad-Bremsmechanismus mit einem Rad-Rotor in Eingriff kommt und das Fahrzeug zum Halten bringt;
**dadurch gekennzeichnet, dass**
sich das Lenksystem und das Bremssystem zusammen innerhalb eines einzelnen modularen Formfaktors befinden, der im Inneren eines Fahrzeug-Führerhauses installiert werden kann.

2. Fahrzeug-Steuerungssystem nach Anspruch 1, das des Weiteren ein Beschleunigungs-Eingabesystem des Fahrzeugs umfasst, das innerhalb des Formfaktors angeordnet ist, wobei das Beschleunigungs-Eingabesystem eine Beschleunigungs-Eingabevorrichtung aufweist, die elektromechanisch mit einer Beschleunigungs-Rückkopplungserzeugungseinrichtung so verbunden ist, dass die Beschleunigungsrückkopplungs-Erzeugungseinrichtung ein Signal erzeugt, das zu einem Antriebssystem eines Fahrzeugs gesendet wird, um so die Geschwindigkeit des Fahrzeugs zu erhöhen.

3. Fahrzeug-Steuerungssystem nach Anspruch 1, wobei der Formfaktor beweglich an einer ersten Tragestruktur angeordnet ist, und wobei der Formfaktor an einer oder mehreren Position/en an der Tragestruktur positioniert werden kann.

4. Fahrzeug-Steuerungssystem nach Anspruch 3, wobei der Formfaktor an einer Position angeordnet ist, die aus einer Gruppe ausgewählt wird, die aus linker Seite, rechter Seite und Mitte besteht.

5. Fahrzeug-Steuerungssystem nach Anspruch 3, wobei der Formfaktor entfernt werden kann.

6. Fahrzeug-Steuerungssystem nach Anspruch 3, das des Weiteren wenigstens eine zweite Tragestruktur umfasst, wobei ein vorderer Abschnitt des Formfaktors mit der ersten Tragestruktur verbunden ist und ein hinterer Abschnitt des Formfaktors mit der zweiten Tragestruktur verbunden ist.

7. Fahrzeug-Steuerungssystem nach Anspruch 6, wobei die zweite Tragestruktur an einer Position angeordnet ist, die niedriger liegt als die der ersten Tragestruktur, so dass der Formfaktor in einem Winkel zwischen der ersten und der zweiten Tragestruktur angeordnet ist.

8. Fahrzeug-Steuerungssystem nach Anspruch 7, wobei der Formfaktor beweglich so zwischen der ersten und der zweiten Tragestruktur angeordnet ist, dass der Winkel der Anordnung eingestellt werden kann.

9. Fahrzeug-Steuerungssystem nach Anspruch 6, das des Weiteren wenigstens zwei Montagewinkel (516) umfasst, wobei wenigstens einer der wenigstens zwei Montagewinkel (516) dem Bremssystem entspricht und dieses trägt, und wenigstens ein anderer der wenigstens zwei Montagewinkel (516) dem Lenksystem entspricht und dieses trägt, und wobei jeder der wenigstens zwei Montagewinkel den Formfaktor mit der ersten Tragestruktur verbindet.

10. Fahrzeug-Steuerungssystem nach Anspruch 9, das des Weiteren wenigstens einen dritten und einen vierten Montagewinkel (516) umfasst, wobei der dritte Montagewinkel dem Bremssystem entspricht und dieses trägt, und wobei der vierte Montagewinkel dem Lenksystem entspricht und dieses trägt, und wobei der dritte und der vierte Montagewinkel mit der zweiten Tragestruktur verbunden sind.

11. Fahrzeug-Steuerungssystem nach Anspruch 1, wobei der Formfaktor ein Gehäuse umfasst, das wenigstens einen Abschnitt des Lenksystems sowie wenigstens einen Abschnitt des Bremssystems umschließt; oder
wobei das Lenksystem und das Bremssystem sich zusammen an einem einzelnen Montagewinkel befinden und der einzelne Montagewinkel einen Lenkabschnitt sowie einen Bremsabschnitt aufweist,
der Lenkabschnitt wenigstens zwei Montagepunkte umfasst, an denen das Lenksystem beweglich so mit dem einzelnen Montagewinkel verbunden werden kann, dass das Lenksystem innerhalb des Formfaktors bewegt werden kann, und
wobei der Bremsabschnitt wenigstens einen Montagepunkt aufweist, der so ausgeführt ist, dass er mit einem Abschnitt des Bremssystems verbunden wird, um das Bremssystem so an dem einzelnen Montagewinkel zu befestigen, dass das Bremssystem unbeweglich bleibt; oder
wobei das Lenksystem so ausgefahren werden kann, das sich ein Abschnitt des Lenksystems über den Formfaktor hinaus erstrecken kann auf an einen bestimmten Insassen eingestellt werden kann; oder
wobei die Lenk-Eingabevorrichtung ein Lenkrad ist; oder
wobei die Brems-Eingabevorrichtung außerhalb des Formfaktors angeordnet und elektronisch mit den Brems-Komponenten des Bremssystems verbunden ist; oder
wobei das Lenksystem und das Bremssystem jeweils nur wenigstens eine funktionale elektronische Verbindung zwischen dem jeweiligen System und einer Fahrzeugplattform so aufweisen, dass die funktionale Verbindung nicht mechanischer Art ist; oder
wobei der Formfaktor aus dem Führerhaus des Fahrzeugs entfernt werden kann.

12. Fahrzeug-Steuerungssystem nach Anspruch 1, wobei die Brems-Eingabevorrichtung ein Bremspedal (510) ist und optional das Bremspedal ein Pedal einer Schwimmbremse ist.

13. Fahrzeug-Steuerungssystem nach Anspruch 2, wobei der Formfaktor ein Gehäuse umfasst, das wenigstens einen Abschnitt des Lenksystems sowie wenigstens einen Abschnitt des Bremssystems und wenigstens einen Abschnitt des Beschleunigungssystems umschließt.

14. Elektrofahrzeug, das umfasst:
eine in sich geschlossene Elektrofahrzeug-Plattform;
ein in sich geschlossenes Fahrzeug-Führerhaus, das mit der in sich geschlossenen Elektrofahrzeug-Plattform verbunden ist, wobei das in sich geschlossene Fahrzeug-Führerhaus des Weiteren ein Fahrzeug-Steuerungssystem nach Anspruch 1 umfasst, und
wobei das Fahrzeug-Steuerungssystem mit der in sich geschlossenen Fahrzeug-Plattform über einen trennbaren elektronischen Verbindungspunkt verbunden ist.

15. Fahrzeug-Steuerungssystem nach Anspruch 14, wobei der Formfaktor aus dem Fahrzeug-Führerhaus entfernt werden kann und die Fahrzeug-Plattform autonom gesteuert werden kann.

## Revendications

1. Système de commande de véhicule (404, 500, 600, 700) comprenant :
un système de direction dans lequel le système de direction comprend un dispositif de direction connecté électromécaniquement à un actionneur à rétroaction de direction (506) où l'actionneur est configuré pour recevoir des signaux d'entrée du dispositif de direction et traduire les signaux d'entrée en une série de signaux de sortie et transmettre lesdits signaux de sortie à un ou plusieurs ensembles moteur-roues du véhicule, de sorte que l'orientation des ensembles roues peut être modifiée pour orienter la position du véhicule et dans lequel le système de direction a une connexion électrique opérationnelle pour se connecter à un véhicule ;
un système de freinage (508) comprenant un dispositif d'entrée de freinage connecté électromécaniquement à un actionneur de freinage qui reçoit un signal d'entrée du dispositif d'entrée qui correspond au mouvement du dispositif d'entrée, et dans lequel l'actionneur de freinage active électromécaniquement un ou plusieurs composants de freinage qui sont connectés à un mécanisme de freinage de roue, de sorte que lorsque l'actionneur de freinage est en prise, le mécanisme de freinage de roue met en prise un rotor de roue, amenant le véhicule à s'arrêter ; **caractérisé en ce que**
le système de direction et le système de freinage sont colocalisés dans un format modulaire unique qui peut être monté dans l'habitacle d'un véhicule.

2. Système de commande de véhicule selon la revendication 1 comprenant en outre un système d'entrée d'accélération de véhicule disposé dans le format dans lequel le système d'entrée d'accélération a un dispositif d'entrée d'accélération connecté électromécaniquement à un générateur à rétroaction d'accélération, de sorte que le générateur à rétroaction d'accélération génère un signal envoyé à un système d'entraînement d'un véhicule afin d'augmenter ainsi la vitesse du véhicule.

3. Système de commande de véhicule selon la revendication 1, dans lequel le format est disposé de manière mobile sur une première structure de support et dans lequel le format peut être positionné à une ou plusieurs positions sur la structure de support.

4. Système de commande de véhicule selon la revendication 3, dans lequel le format est disposé à un emplacement sélectionné parmi un groupe constitué du côté gauche, du côté droit et du centre.

5. Système de commande de véhicule selon la revendication 3, dans lequel le format est amovible.

6. Système de commande de véhicule selon la revendication 3, comprenant en outre au moins une seconde structure de support dans lequel une partie avant du format est connectée à la première structure de support et une partie arrière du format est connectée à la seconde structure de support.

7. Système de commande de véhicule selon la revendication 6, dans lequel la seconde structure de support est disposée à un emplacement qui est plus bas que la première structure de support, de sorte que le format est disposé à un angle entre la première et la seconde structure de support.

8. Système de commande de véhicule selon la revendication 7, dans lequel le format est disposé de manière mobile entre la première et la seconde structure de support de sorte que l'angle de disposition peut être ajusté.

9. Système de commande de véhicule selon la revendication 6, comprenant en outre au moins deux étriers de montage (516) dans lequel au moins l'un des au moins deux étriers de montage (516) correspond au système de freinage, et supporte celui-ci, et au moins un autre des au moins deux étriers de montage (516) correspond au système de direction, et supporte celui-ci, et dans lequel chacun des au moins deux étriers de montage connecte le format à la première structure de support.

10. Système de commande de véhicule selon la revendication 9, comprenant en outre au moins un troisième et un quatrième étrier de montage (516) dans lequel le troisième étrier de montage correspond au système de freinage, et supporte celui-ci, et dans lequel le quatrième étrier de montage correspond au système de direction, et supporte celui-ci, et dans lequel les troisième et quatrième étriers de montage sont connectés à la seconde structure de support.

11. Système de commande de véhicule selon la revendication 1, dans lequel le format comprend un boîtier qui renferme au moins une partie du système de direction et au moins une partie du système de freinage ; ou
dans lequel le système de direction et le système de freinage sont colocalisés sur un étrier de montage unique et dans lequel l'étrier de montage unique a une partie de direction et une partie de freinage,
la partie de direction comprenant au moins deux points de montage où le système de direction peut être connecté de manière mobile à l'étrier de montage unique de sorte que le système de direction peut être déplacé dans le format, et
dans lequel la partie de freinage a au moins un point de montage configuré pour se connecter à une partie du système de freinage afin de fixer le système de freinage à l'étrier de montage unique de sorte que le système de freinage reste immobile ; ou
dans lequel le système de direction est extensible de sorte qu'une partie du système de direction peut s'étendre au-delà du format et s'ajuster à un occupant particulier ; ou dans lequel le dispositif d'entrée de direction est un volant ; ou
dans lequel le dispositif d'entrée de freinage est disposé en dehors du format et connecté électroniquement aux composants de freinage du système de freinage ; ou dans lequel chacun du système de direction et du système de freinage a uniquement au moins une connexion électronique opérationnelle entre le système respectif et une plateforme de véhicule, de sorte que la connexion opérationnelle n'est pas mécanique par nature ; ou
dans lequel le format peut être retiré de l'habitacle du véhicule.

12. Système de commande de véhicule selon la revendication 1, dans lequel le dispositif d'entrée de freinage est une pédale de frein (510), dans lequel, facultativement, la pédale de frein est une pédale de frein flottant.

13. Système de commande de véhicule selon la revendication 2, dans lequel le format comprend un boîtier qui renferme au moins une partie du système de direction et au moins une partie du système de freinage et au moins une partie du système d'accélération.

14. Véhicule électrique comprenant :
une plateforme autonome de véhicule électrique ;
un habitacle de véhicule autonome connecté à la plateforme autonome de véhicule électrique, dans lequel l'habitacle de véhicule autonome comprend en outre un système de commande de véhicule selon la revendication 1 et
dans lequel le système de commande de véhicule est connecté à la plateforme autonome de véhicule électrique via un point de connexion électronique pouvant être déconnecté.

15. Système de commande de véhicule selon la revendication 14, dans lequel le format peut être retiré de l'habitacle de véhicule de sorte que la plateforme de véhicule peut être commandée de manière autonome.
